# FASCICULE DE BREVET EUROPEEN

(11) **EP 1 658 183 B1**
(45) Date de publication et mention de la délivrance du brevet: **14.09.2011**
(21) Numéro de dépôt: 04763508.1
(22) Date de dépôt: 27.07.2004
(51) Int. Cl.: B60G 3/06, B60G 3/20, B60G 3/18, B60G 3/26, B60G 21/00, B60G 21/05

(54) **DISPOSITIF DE SUSPENSION**
AUFHÄNGUNGSVORRICHTUNG
SUSPENSION DEVICE

(30) Priorité: 18.08.2003 FR 0310022; 11.12.2003 WO PCT/EP03/14066; 24.06.2004 FR 0406930
(43) Date de publication de la demande: 24.05.2006
(73) Titulaire: Société de Technologie Michelin, 63000 Clermont-Ferrand Cedex 09 (FR); Michelin Recherche et Technique S.A., 1763 Granges-Paccot (CH)
(72) Inventeur: SERRA, Loic, F-63450 Tallende (FR)
(74) Mandataire: Lasson, Cédric Y. M.
(86) Numéro de dépôt international: PCT/EP2004/008365
(87) Numéro de publication internationale: WO 2005/021294

(56) Documents cités:
- EP-A- 1 275 534
- WO-A-01/72572
- FR-A- 2 806 693
- FR-A- 2 819 752

## Description

La présente invention concerne la liaison au sol des véhicules, en particulier les dispositifs de suspension, et plus particulièrement le guidage des roues.

La demande internationale WO 01/72572 décrit un dispositif de support de roue permettant un degré de liberté de carrossage de la roue par rapport aux éléments de suspension. Ce degré de liberté est contrôlé soit de manière active, par exemple par un vérin en fonctions de paramètres de roulage du véhicule, soit de manière passive par les efforts qui s'exercent sur la roue. Les demandes de brevet EP1247663 et EP1275534 décrivent d'autres principes mécaniques d'un dispositif de suspension et de support de roue permettant un fonctionnement similaire.

On appelle "plan de roue" le plan, lié à la roue, qui est perpendiculaire à l'axe de la roue et qui passe par le milieu du pneumatique. La position angulaire du plan de roue par rapport à la caisse du véhicule est définie par deux angles, l'angle de carrossage et l'angle de braquage. L'angle de carrossage d'une roue est l'angle qui sépare, dans un plan transversal perpendiculaire au sol, le plan de roue du plan médian du véhicule. Cet angle est positif lorsque la partie supérieure de la roue s'écarte du plan médian vers l'extérieur du véhicule, on parle alors couramment de "carrossage" ou de "carrossage positif ". A l'inverse, lorsque cet angle est négatif, on parle de "contre-carrossage" ou de "carrossage négatif'. On emploiera indifféremment « carrossage » ou « angle de carrossage » par la suite.

L'angle de braquage d'une roue est l'angle qui sépare, dans un plan horizontal parallèle au sol, le plan de roue du plan médian du véhicule.

Le plan de carrossage est le plan dans lequel s'effectue le carrossage. C'est le plan vertical, transversal par rapport au véhicule et passant par le centre de l'aire de contact statique. Lorsque la roue a un angle de braquage nul, le plan de carrossage contient l'axe de la roue.

Dans la demande WO 01/72572 qui expose également le contexte général de l'invention, il est proposé, pour les systèmes passifs, que le centre instantané de rotation du mouvement de carrossage de la roue par rapport aux éléments de suspension soit situé sous le plan du sol afin que les efforts transversaux qui agissent dans l'aire de contact génèrent un couple tendant à incliner le plan de la roue dans le sens souhaité (ce centre instantané de rotation est désigné "premier centre instantané de rotation" dans le document WO 01/72572). Cependant, bien que les efforts transversaux génèrent, sous cette condition, un couple suivant l'axe de carrossage qui tend à incliner la roue dans le sens souhaité, l'efficacité en terme de variation de carrossage est très différente selon les configurations mises en oeuvre. Pourtant dans la pratique, la sensibilité des variations de carrossage en fonction des efforts transmis dans l'aire de contact est un critère important. En effet, on recherche généralement à concevoir un système de suspension tel que la variation passive de carrossage soit prévisible, stable et satisfaisante en termes d'inclinaison maximale. Ceci est particulièrement important pour les véhicules très performants destinés en particulier à la compétition automobile. Pour ces véhicules, la recherche de la performance absolue passe par une optimisation de l'adhérence longitudinale et transversale. Cette optimisation n'est possible que si l'angle de carrossage de la roue est à tout moment proche de l'idéal pour le fonctionnement du pneumatique. Un carrossage idéal en matière d'adhérence du pneumatique est un carrossage permettant d'optimiser l'homogénéité de la répartition de pression dans l'aire de contact, c'est à dire permettant par exemple de compenser l'effet, sur la répartition de pression dans l'aire de contact, qu'ont les déformations latérales du pneumatique lorsqu'il est en dérive (typiquement au cours d'un virage).

Un objectif de l'invention est donc un dispositif de suspension à carrossage variable dont le fonctionnement passif soit amélioré.

L'invention propose pour cela un dispositif de suspension pour véhicule comportant des moyens de carrossage qui confèrent aux roues de rayon "R" un degré de liberté de carrossage par rapport aux éléments de suspension, les roues étant liées aux éléments de suspension de manière à ce que le mouvement de carrossage de chaque roue admette, autour d'une position moyenne de la roue, un centre instantané de rotation, ledit dispositif comportant des moyens de liaison en carrossage permettant de lier les mouvements de carrossage d'une roue avec ceux de l'autre roue et étant configuré en outre de manière à ce que, Y et Z étant respectivement les abscisse et ordonnée de la position instantanée dudit centre instantané de rotation dans le plan de carrossage, ladite position instantanée vérifie, pour un carrossage nul de la roue, la condition suivante: *Z* ≤ 0.75* *Y*-0.12158* *R*.

De préférence, le dispositif de suspension de l'invention est configuré de manière à ce que ladite condition est en outre vérifiée au cours d'un débattement de carrossage de 0° à -1°, de préférence encore de 0° à -2°, de préférence encore de 0° à -3°, de préférence encore de 0° à - 3°, de préférence encore de 0° à -4°, de préférence encore de 0° à -5° et ainsi de suite dans la mesure du débattement de carrossage visé.

De préférence, le dispositif est configuré de manière à ce que la position dudit centre instantané de rotation, pour un carrossage de -1°, vérifie en outre la condition suivante: *Z*≤0.75**Y*-0.1562**R*.

De préférence, le dispositif est configuré de manière à ce que la position dudit centre instantané de rotation, pour un carrossage de -2°, vérifie en outre la condition suivante: *Z*≤0.75**Y*-0.1908**R*.

De préférence, le dispositif est configuré de manière à ce que la position dudit centre instantané de rotation, pour un carrossage de -3°, vérifie en outre la condition suivante: *Z*≤0.75**Y*-0.2255**R*.

De préférence, le dispositif est configuré de manière à ce que la position dudit centre instantané de rotation, pour un carrossage de -4°, vérifie en outre la condition suivante: *Z*≤0.75**Y*-0.2601**R*.

De préférence, le dispositif est configuré de manière à ce que la position dudit centre instantané de rotation, pour un carrossage de -5°, vérifie en outre la condition suivante: *Z*≤0.75**Y*-0.2947**R*.

En effet, il est apparu de manière surprenante que le déplacement du centre instantané de rotation au cours du mouvement de carrossage doit être contenu dans des limites d'autant plus réduites que la course de carrossage utile visée est importante.

De préférence, le dispositif de suspension selon l'invention est configuré en outre de manière à ce que, pour un carrossage nul de la roue, ledit centre instantané de rotation se situe sensiblement au niveau du sol et à une distance "d" du plan de roue vers l'intérieur du véhicule. De la sorte, les variations de carrossage sont essentiellement fonction des efforts verticaux agissant sur la roue dans l'aire de contact, c'est à dire des variations de charge.

De préférence, le dispositif est configuré en outre de manière à ce que, pour un carrossage nul de la roue, ladite position instantanée vérifie la condition suivante: *Y*≻0.125**R*. De préférence encore, le dispositif est configuré en outre de manière à ce que, pour un carrossage nul de la roue, ladite position instantanée vérifie la condition suivante: *Z*≥-0.75**Y*+0.12158**R*

De préférence, les moyens de carrossage comporte un porte-roue et des biellettes articulées en leurs parties inférieures aux éléments de suspension et en leurs parties supérieures audit porte-roue.

De préférence, le dispositif de suspension comprend en outre des moyens de verrouillage afin de permettre le blocage du mouvement de carrossage en fonction, par exemple, de l'accélération transversale subie par le véhicule.

Selon un mode de réalisation préféré de l'invention, les moyens de carrossage conférant au porte-roue un degré de liberté de carrossage par rapport aux éléments de suspension comprennent une triple charnière fonctionnant selon trois axes sensiblement longitudinaux liée d'une part au porte-roue et d'autre part aux éléments de suspension comme décrit dans le demande internationale PCT/EP2003/014937.

L'invention concerne également un véhicule comprenant un tel dispositif de suspension.

La présente description sera mieux comprise à la lecture des figures jointes qui illustrent l'invention en particulier sur la base des principes mécaniques exposés dans la demande WO 01/72572. Ces exemples ne sont naturellement pas limitatifs.
La figure 1 représente schématiquement en vue longitudinale plane le principe d'un dispositif de suspension selon l'invention.
La figure 2 représente schématiquement en vue longitudinale plane un mode de réalisation préféré du dispositif de suspension selon l'invention.
La figure 3 représente schématiquement en vue longitudinale plane le principe d'un dispositif de suspension selon l'invention lorsque le carrossage de la roue varie.
La figure 4 représente un agrandissement d'une partie de la figure 3
Les figures 5, 6 et 7 représentent schématiquement en vue longitudinale plane des exemples de mode de réalisation du dispositif de suspension selon l'invention.

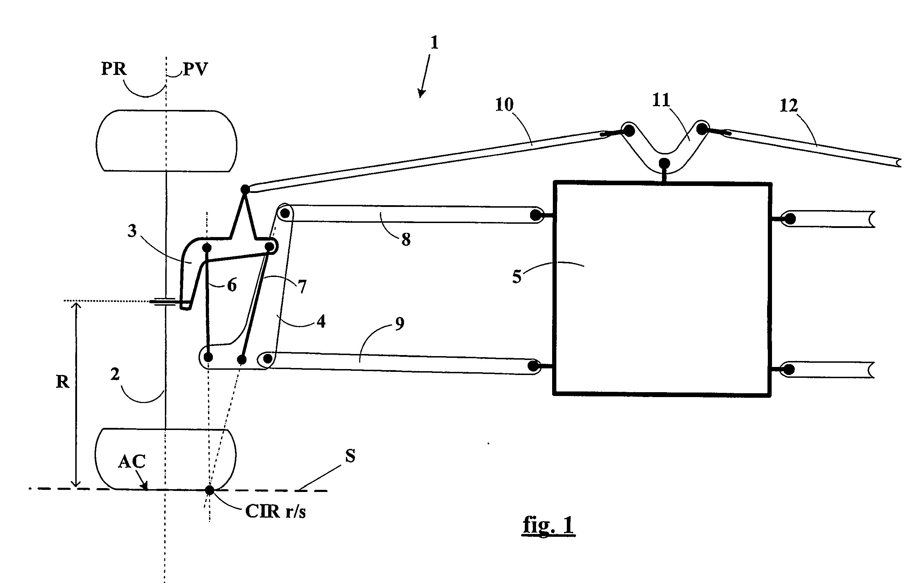

A la figure 1, on a représenté un dispositif de suspension 1 selon l'invention. Le dispositif comprend différents éléments destinés à maintenir le plan PR d'une roue 2, par rapport à la caisse 5 d'un véhicule. La roue 2, de rayon « R », est en appui sur le sol S par l'intermédiaire de son aire de contact AC. Le rayon R (également appelé "rayon écrasé") est la distance entre le sol S et l'axe de la roue lorsque la roue est verticale (carrossage nul) et porte sa charge statique nominale de fonctionnement. Le porte-roue 3 est lié à la caisse 5 par des moyens (4, 6, 7, 8, 9) lui permettant deux degrés de liberté. Le mouvement de carrossage de la roue 2 est permis par une liaison du porte-roue 3 avec le support intermédiaire 4 par des biellettes pivotantes 6 et 7 articulées en leurs parties inférieures aux éléments de suspension (4, 8, 9) et en leurs parties supérieures au porte-roue 3. Le mouvement de débattement de suspension est permis par une liaison du support intermédiaire 4 avec la caisse 5 par des bras (ou des triangles) supérieur 8 et inférieur 9. Ainsi, le dispositif de suspension 1 est configuré de manière à conférer au porte-roue, par rapport à la caisse 5, d'une part un degré de liberté de carrossage puisque le porte-roue peut s'incliner par rapport aux éléments de suspension et par conséquent par rapport à la caisse et d'autre part un degré de liberté de débattement de suspension puisque le porte-roue peut effectuer des mouvements sensiblement verticaux de façon connue en soi, par exemple à la manière des systèmes «multi-bras» ou « double triangle ». Le ressort de suspension ou tout autre dispositif permettant de porter la charge n'a pas été représenté ici.

En outre, le système de suspension de l'invention comporte des moyens de liaison (10, 11, 12) qui lient les mouvements de carrossage de la roue 2 avec ceux de la roue opposée (non représentée). Les moyens de liaison peuvent prendre par exemple la forme représentée ici d'un poussoir 10 commandé par le porte-roue 3 et agissant par l'intermédiaire d'un basculeur 11 sur un poussoir opposé 12 lié au porte-roue de la roue opposée. La configuration géométrique des poussoirs et du basculeur peut être adaptée afin d'obtenir un comportement déterminé du carrossage d'une roue par rapport à l'autre en fonction du sens de variation. En effet, il peut par exemple être intéressant d'obtenir une variation différente du carrossage de chaque roue (intérieure et extérieure) dans une courbe. Un principe de l'invention est de combiner l'énergie transmise par le sol à chaque roue pour obtenir une variation cohérente du carrossage des deux roues de l'essieu indépendamment de la proportion d'énergie transmise à chaque roue isolément. Des moyens de blocage ou de contrôle peuvent également intervenir sur cette liaison. Par exemple, un dispositif de verrouillage peut empêcher les mouvements de carrossage en deçà d'un seuil déterminé d'accélération transversale afin de stabiliser le véhicule en ligne droite.

Le mouvement de carrossage de la roue 2 (ou du porte-roue 3) par rapport au support intermédiaire 4 admet un centre instantané de rotation (CIR r/s). Dans ce mode de réalisation, la position de ce centre instantané de rotation est déterminée par l'intersection des axes des biellettes 6 et 7 qui lient le porte-roue 3 au support intermédiaire 4. La figure 1 représente le dispositif de suspension dans une position moyenne de la roue correspondant à la position statique du dispositif de suspension lorsque le véhicule porte sa charge nominale sur un sol plat. Le carrossage statique est ici représenté sensiblement nul, c'est à dire que le plan de roue PR correspond au plan vertical PV passant par le centre de l'aire de contact AC et parallèle au plan médian du véhicule.

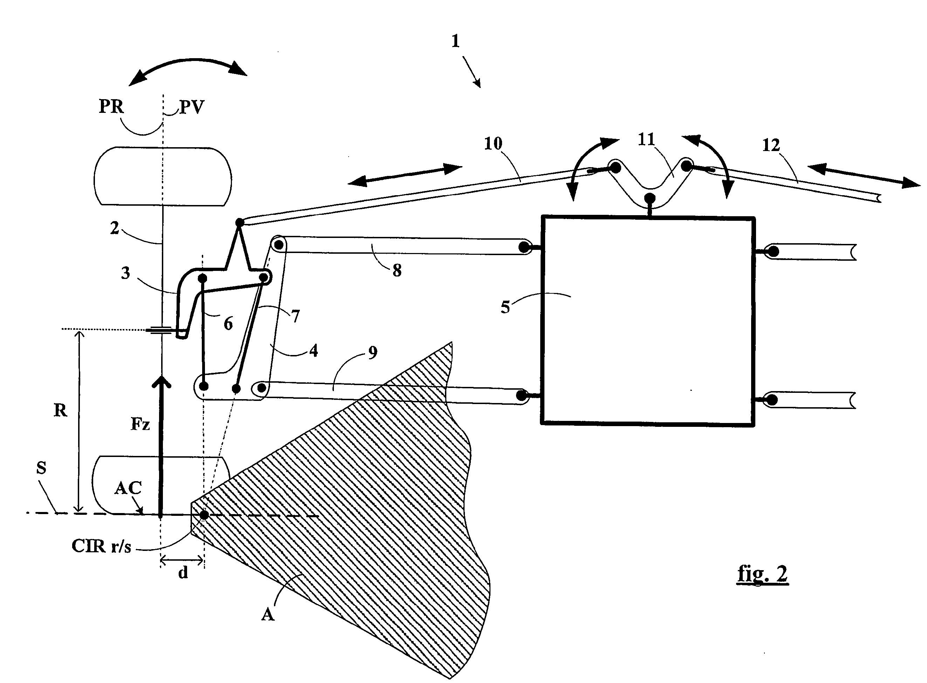

Selon un mode de réalisation préféré de l'invention, le centre instantané de rotation du mouvement de carrossage de la roue par rapport aux éléments de suspension (CIR r/s) est situé dans cette position moyenne à une distance "d" du plan de roue PR et sensiblement au niveau du sol. Ceci est représenté schématiquement à la figure 2. Dans ce mode de réalisation préféré, les variations de carrossage sont essentiellement liées aux variations des efforts verticaux (Fz) qui agissent sur la roue dans l'aire de contact (AC). Sur un véhicule de compétition automobile, une distance "d" de l'ordre de 40 mm peut dans ce cas être suffisante pour obtenir les variations de carrossage souhaitées dans les virages. De préférence encore, le centre instantané de rotation reste contenu dans le secteur A au cours du débattement de carrossage visé.

On voit bien sur la figure 2 que la charge verticale Fz portée par la roue crée un couple tendant à faire pivoter le porte-roue 3, autour du centre instantané de rotation (CIR r/s), vers l'intérieur du véhicule mais les moyens de liaison (10, 11, 12) empêchent tout mouvement de carrossage aussi longtemps que la charge verticale portée par la roue opposée est identique. Lorsque la charge portée par une roue augmente par rapport à la charge portée par l'autre, les roues s'inclinent, vers l'intérieur du véhicule pour la roue la plus chargée et vers l'extérieur pour l'autre roue. Ce mode de réalisation préféré du système de suspension de l'invention est donc sensible à la variation relative de la charge portée par chaque roue de l'essieu, c'est à dire à ce que l'on appelle communément le "transfert de charge". Le fait que ce transfert de charge induise généralement du roulis de caisse n'est pas pertinent. D'ailleurs, même en l'absence de roulis (par exemple dans le cas d'un véhicule sans suspension ou équipé d'un suspension active capable de compenser le roulis), la variation de carrossage recherchée a bien lieu. Un avantage supplémentaire de ce mode de réalisation de l'invention est qu'il peut être insensible aux variations de charge aérodynamique très importantes sur certains véhicules, en particulier en compétition. La liaison permettant un centre instantané de rotation au niveau du sol doit nécessairement être virtuelle (par exemple par un système à biellettes 6 et 7) mais dans la partie supérieure de la zone A, on peut adopter des systèmes de variation de carrossage à pivot matériel fixe.

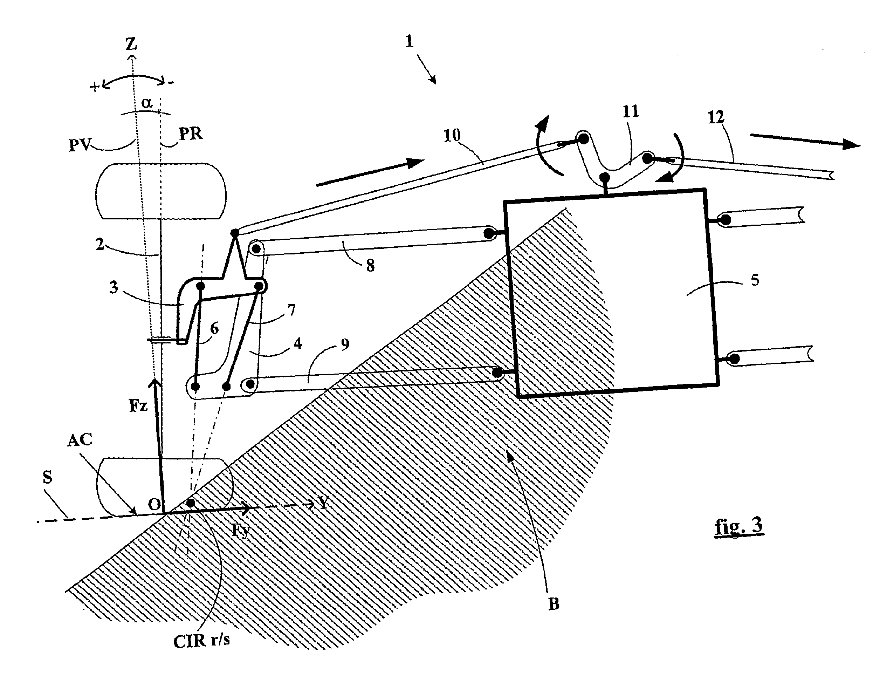

La figure 3 représente le mode de réalisation de la figure 1 lorsque la roue 2 adopte un angle de carrossage α négatif (contre-carrossage). En effet, le plan de roue PR est incliné vers l'intérieur du véhicule d'un angle α par rapport au plan vertical de référence PV. Cette inclinaison peut être occasionnée par la combinaison d'un effort vertical Fz et d'un effort transversal Fy appliqué dans l'aire de contact AC. Sur la figure 3, Fy est orienté vers l'intérieur du véhicule. Ceci correspond par exemple au cas de la roue qui se trouve du côté extérieur au virage lorsque le véhicule suit une trajectoire courbe. Cependant, le carrossage de la roue 2 est également fonction des efforts qui s'exercent sur l'autre roue de l'essieu du fait des moyens de liaison en carrossage (10, 11, 12).

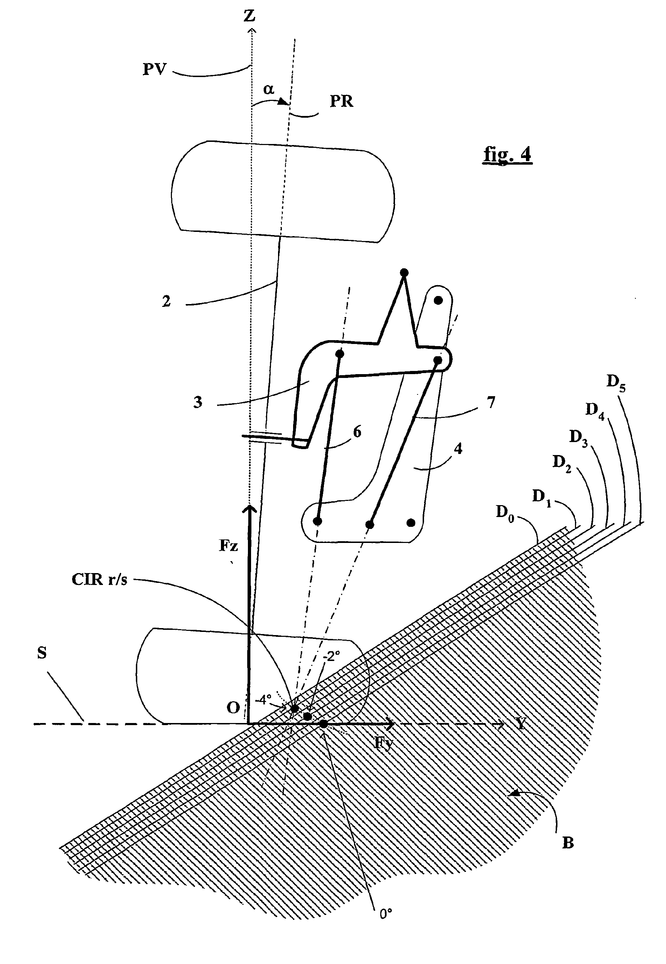

Selon l'invention, la zone B représente la partie du plan de carrossage dans laquelle doit se situer le centre instantané de rotation (CIR r/s) du degré de liberté de carrossage lorsque la roue est dans sa position moyenne à carrossage nul. Cette caractéristique est détaillée plus loin dans la description de la figure 4.

Les mouvements de carrossage du porte-roue peuvent également être "simulés" c'est à dire imposés par des efforts appliqués sur la roue ou directement sur le porte-roue 3 alors que le support intermédiaire 4 est maintenu fixe par rapport à la caisse 5 et par rapport au sol S. On peut ainsi contrôler, mesurer, analyser le fonctionnement cinématique du système de suspension. Comme on l'a vu, sur cet exemple, le centre instantané de rotation (CIR r/s) est le point d'intersection des axes des biellettes (6, 7) qui définissent la cinématique des mouvements du porte-roue 3 par rapport au support intermédiaire 4. La position de ce point est variable lors des mouvements de carrossage du porte-roue comme on le voit en comparant par exemple les figures 2 et 3.

La figure 4 permet d'illustrer plus en détail les caractéristiques préférées de l'invention. On a représenté en pointillé sur la figure 4 le déplacement, l'évolution de la position du centre instantané de rotation (CIR r/s) au cours du débattement de carrossage. Selon une caractéristique préférée de l'invention, le dispositif de support est configuré de manière à ce que l'évolution du centre instantané de rotation soit contenue dans une partie bien définie du plan de carrossage. Cette partie B du plan de carrossage est limité par une droite "D₀". Cette partie B du plan est en fait un demi-plan. Dans la suite de la présente description, on désignera donc une telle partie du plan par le terme "demi-plan". Un demi-plan donné est donc une partie du plan de carrossage dans laquelle doit se situer, selon l'invention, le centre instantané de rotation pour un angle de carrossage donné ou au cours d'un débattement de carrossage donné.

La figure 4 représente également, dans le plan de carrossage, le repère orthogonal (OY, OZ) utilisé pour exprimer à l'aide de coordonnées cartésiennes les caractéristiques préférées de l'invention concernant les positions du centre instantané de rotation (CIR r/s). Ce repère est centré d'une part sur le plan vertical PV (équivalent au plan de roue PR lorsque ce dernier est vertical, voir figure 1) et d'autre part sur le plan du sol S. L'abscisse Y correspond donc à la position horizontale par rapport au plan de référence PV et l'ordonnée Z correspond à la position verticale par rapport au sol S. L'abscisse Y est positive vers l'intérieur du véhicule et négative vers l'extérieur. L'ordonnée Z est positive lorsque le point considéré se situe au dessus du sol S et négative lorsqu'il se situe en dessous. Dans ce repère, on peut porter les profils des biellettes 6 et 7. Les biellettes sont articulées en leur partie inférieure aux éléments de suspension (4) et en leur partie supérieure au porte-roue 3. Comme on l'a vu plus haut, le mouvement de la partie supérieure des biellettes crée le degré de liberté de carrossage du porte-roue par rapport aux éléments de suspension. Le mouvement de carrossage du porte-roue a lieu autour du centre instantané de rotation (CIR r/s) dont la position évolue à chaque instant au cours du mouvement de carrossage. La position du centre instantané de rotation correspond donc, tout au long du mouvement de carrossage, à des coordonnées Y et Z variables. Cette variation dépend de la position et de l'orientation des biellettes dans le plan de carrossage. Ce graphique (au même titre que les figures précédentes) peut représenter une vue de derrière de la partie gauche de la suspension d'un véhicule selon l'invention. L'intérieur du véhicule se trouve donc à droite de la figure et l'extérieur se trouve à gauche. Sur la figure 4, on a représenté schématiquement en pointillé la courbe d'évolution du centre instantané de rotation. On a porté sur cette courbe les points correspondant à la position du centre instantané de rotation pour un angle de carrossage de 0°, -2°, -4°. Les positions de la roue 2, du porte roue 3 et des biellettes 6 et 7 sont représentées pour un carrossage de -4°.

Dans cette représentation, le demi-plan B est la partie du plan de carrossage délimitée par la droite D₀. La droite oblique D₀ contient tous les points tels que Z = aY + b, "a" étant la pente de D₀ et "b" étant l'ordonnée à l'origine de D₀. Le demi-plan B peut donc être défini par l'inégalité suivante: *Z*≤*aY*+*b*

Le demi-plan B délimité par la droite D₀ représente schématiquement la partie du plan de carrossage dans laquelle doit selon l'invention être situé, le centre instantané de rotation pour un carrossage nul (α = 0) de la roue.

De préférence,le demi-plan B représente en outre la partie du plan de carrossage dans laquelle doit être situé, selon l'invention, le centre instantané de rotation au cours d'un débattement de carrossage de 0° à - 1°.

Si le dispositif est conçu pour avoir un débattement de carrossage utile couvrant au moins l'intervalle de 0° à -2°, le demi-plan B est également la partie du plan de carrossage dans laquelle doit être situé, de préférence, le centre instantané de rotation au cours d'un débattement de carrossage de 0° à -2°.

Si le dispositif est conçu pour avoir un débattement de carrossage utile couvrant au moins l'intervalle de 0° à -3°, le demi-plan B est de préférence également la partie du plan de carrossage dans laquelle doit être situé le centre instantané de rotation au cours d'un débattement de carrossage de 0° à -3° et ainsi de suite.

Ce mode de représentation graphique permet de bien visualiser la signification des caractéristiques concernant l'évolution des différentes positions du centre instantané de rotation. Cette représentation est tout à fait équivalente aux critères employés dans les revendications de la présente demande et qui sont exprimés sous la forme de conditions sur les coordonnées cartésiennes (horizontales Y et verticales Z) du centre instantané de rotation dans le plan de carrossage.

Les différents secteurs et zone sont ouverts, c'est à dire qu'ils s'étendent à l'infini. En conséquence, plus le centre instantané de rotation d'une configuration est éloigné sous le sol et/ou vers l'intérieur du véhicule, plus l'évolution acceptable selon les critères exposés précédemment peut être importante. Cependant, des critères secondaires comme par exemple la variation de voie ou de demi-voie, l'encombrement ou la masse du système dissuadent l'homme du métier de choisir des configurations où le centre instantané de rotation est trop éloigné du sol.

Selon l'invention, le centre instantané de rotation se situe de préférence dans le demi-plan B tout au long d'un débattement de carrossage. Cependant, si le débattement du dispositif est limité par une butée de course ou une contrainte constructive de même effet, la configuration géométrique de base du dispositif de support (en particulier la position et l'orientation des biellettes) doit de préférence satisfaire tout de même aux conditions exprimées par le demi-plan B, c'est à dire que le débattement considéré peut être en partie théorique, virtuel.

On a représenté également schématiquement les limites D₁, D₂, D₃, D₄ et D₅ des demi-plans B correspondant aux caractéristiques de position du centre instantané de rotation pour des angles de contre-carrossage donnés, respectivement de -1°, -2°, -3°, - 4° et - 5°. La configuration représentée satisfait au critère correspondant à la limite D₂ puisque la position du centre instantané de rotation pour un carrossage de -2° est comprise dans le demi-plan B limité par D₂. En revanche, dans cet exemple la position pour un carrossage de -4° n'est pas contenue dans le demi-plan B limité par la droite correspondante (D₄).

On peut transposer ce qui vient d'être dit pour le demi-plan B à la définition de la partie A du plan de carrossage illustrée à la figure 2. En fait, cette partie A que l'on peut voir comme un secteur tronqué du plan de carrossage est limitée par trois droites. Le secteur A du plan de carrossage peut donc par exemple être défini par les conditions suivantes sur les abscisse (Y) et ordonnée (Z) de la position du centre instantané:
- *Y* ≻ 0.125**R*
- *Z* ≤ 0.75**Y*-0.12158 * *R*
- *Z* ≥ -0.75**Y*+0.12158 * *R*

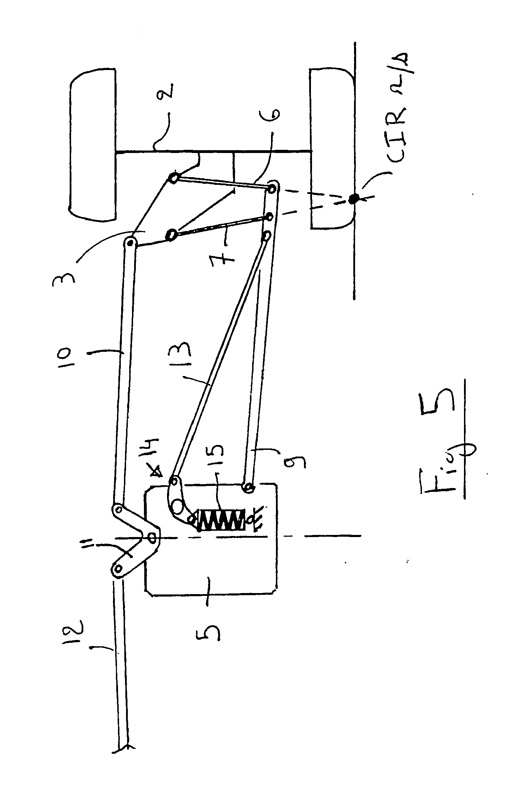

A la figure 5 on a représenté un autre mode de réalisation de l'invention. Sur cet exemple, la fonction du support intermédiaire (référencé 4 sur la figure 1) est assurée directement par le bras inférieur 9. Ce bras peut être trapézoïdal (en forme de A) ou en forme de L et ainsi reprendre tous les efforts à l'exception de l'effort vertical (Fz). En d'autre termes, un tel bras est articulé par une liaison pivot à la caisse 5 et une autre liaison pivot au porte-roue 3. Alternativement, les efforts longitudinaux, d'enroulement et/ou de braquage peuvent être repris par un poussoir 10 lui-même en forme de triangle ou de trapèze. Dans ce cas, le bras inférieur 9 peut alors être lié à la caisse par une liaison rotule seulement (et non pivot). Dans les deux cas, la charge verticale est reprise par un système de poussoir ("push-rod" 13) et transmise à un ressort 15 par l'intermédiaire d'un basculeur 14. Les autres éléments sont repris de la figure 1 sans modification.

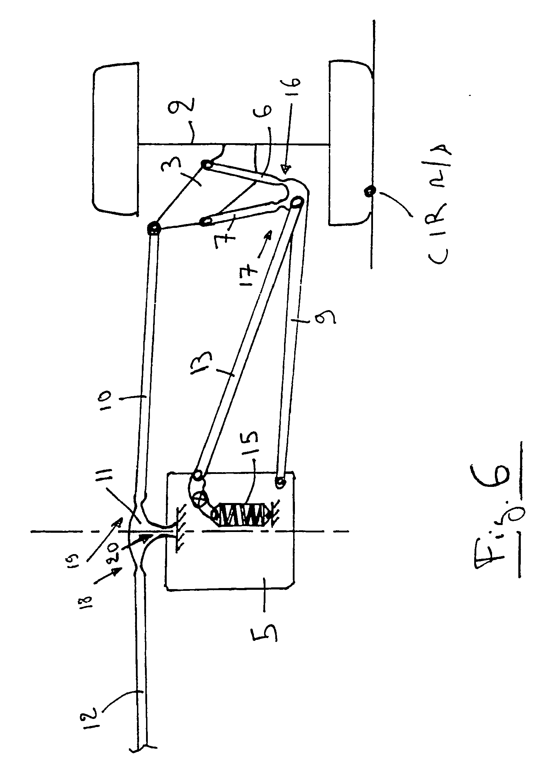

A la figure 6 on a représenté un autre mode de réalisation de l'invention. Sur cet exemple, un certain nombre de liaisons pivot est assuré par des zones flexibles prévus sur des pièces monoblocs. Par exemple, ici les biellettes 6 et 7 sont des extensions solidaires du bras inférieur 9. Les zones flexibles (16 et 17) situées aux extrémités inférieures des biellettes permettent de définir un centre instantané de rotation (CIR r/s) au niveau du sol. De même, les poussoirs 10 et 12 et le basculeur 11 sont reliés entre eux et à la caisse 5 par des zones flexibles (18, 19, 20) pour former une pièce unique. Les autres éléments sont repris de la figure 5 sans modification.

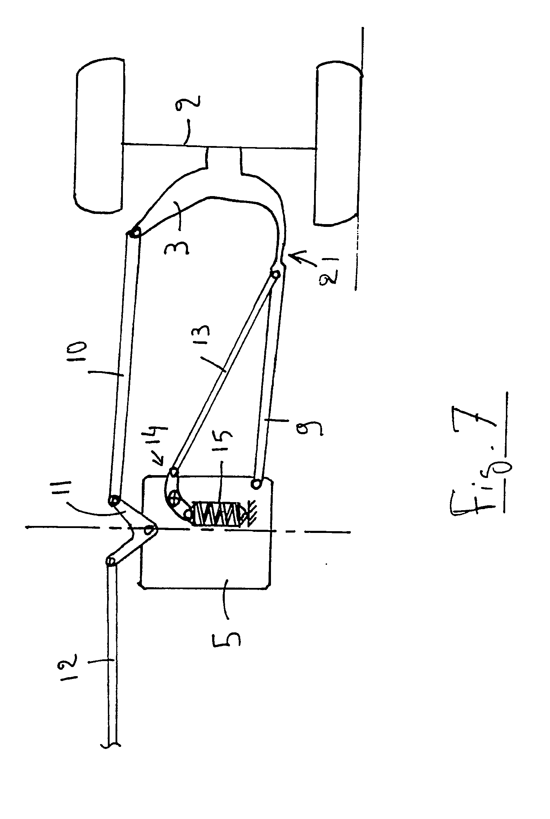

A la figure 7 on a représenté un autre mode de réalisation de l'invention. Il diffère principalement de celui de la figure 4 par son mode de liaison entre les éléments de suspension et le porte-roue. Ici, la liaison pivot du porte-roue 3 vis à vis du bras inférieur 9 (qui constitue le support intermédiaire comme sur les figures 5 et 6) est régie par une zone flexible (21). Ainsi, les biellettes sont supprimées et le porte-roue 3 est solidaire du bras (ou trapèze) 9. La définition précise du centre instantané de rotation (CIR r/s) dépend alors en particulier de la géométrie de la zone flexible (21).

Une particularité intéressante de l'invention est qu'elle est applicable à tous les schémas de suspensions connus puisque l'on ajoute à ces systèmes existants des éléments supplémentaires permettant un degré de liberté de carrossage en plus du degré de liberté de suspension existant. Par exemple, l'invention peut bien sûr trouver son application sur la base des systèmes de suspension MacPherson ou dérivés comme décrit dans la demande WO 01/72572 et en particulier aux figures 2 et 3 de ce document. Dans ce cas la partie inférieure de la jambe de force constitue le support intermédiaire sur lequel est articulé le porte-roue. Les principes de l'invention peuvent également être appliqués en combinaison avec les moyens de carrossage décrits dans les demandes de brevet EP1247663, EP1275534, PCT/EP2003/014937, FR2002/16947, FR2002/15685 ou PCT/EP2003/014066.

Les moyens de liaison en carrossage (10, 11, 12) sont de préférence des moyens mécaniques simples tels que ceux décrits sur les figures de la présente demande. Cependant, des moyens différents, par exemple utilisant des vérins hydrauliques ou électriques dont les mouvements sont liés entre eux peuvent être utilisés et présenter des avantages par exemple en termes d'encombrement.

Le système de suspension de l'invention peut être mis en oeuvre sur un essieu directeur ou non directeur, moteur ou non moteur. En particulier, il représente un intérêt certain en compétition automobile et sur le marché des véhicules de tourisme sportifs.

Afin de vérifier qu'un dispositif de support ou de suspension satisfait à un critère donné concernant la variation de la position de son centre instantané de rotation, on peut utiliser la méthode suivante:
1- déterminer la géométrie du système lorsque la suspension porte sa charge nominale statique, c'est à dire relever la position dans le plan de carrossage des points d'articulation des biellettes, du plan de roue PR, du plan du sol S et mesurer le rayon écrasé R (pour un angle de carrossage nul et un pneumatique à sa pression d'utilisation normale).
2- Construire la courbe d'évolution du centre instantané de rotation dans le plan de carrossage. Ceci peut être fait par exemple de manière théorique à partir de la configuration relevée à l'étape 1. Cela peut également être fait de manière expérimentale en imposant artificiellement la variation de carrossage au porte-roue afin de balayer le débattement de carrossage visée (par exemple de 0° à -3°) et en relevant au fur et à mesure les positions des biellettes pour en déduire ensuite les positions correspondantes du centre instantané de rotation. Pour appliquer la méthode expérimentale, le le support intermédiaire (ou le cas échéant le triangle inférieur) doit être maintenu immobile par rapport au sol S et au plan de référence PV par exemple en le fixant sur un banc de mesure (marbre). La roue ou le pneumatique est alors avantageusement démonté(e). La méthode expérimentale peut être limitée par la présence de butées ou autres contraintes constructives. Dans ce cas, on doit utiliser la méthode théorique au moins pour la partie non accessible du débattement concerné.
3- comparer graphiquement ou numériquement l'évolution ainsi définie avec les critères déterminés en fonction du rayon R constaté.

## Revendications

1. Dispositif de suspension pour véhicule comportant des moyens de carrossage (3, 6, 7) qui confèrent aux roues (2) de rayon "R" un degré de liberté de carrossage par rapport aux éléments de suspension (4, 8, 9), les roues étant liées aux éléments de suspension de manière à ce que le mouvement de carrossage de chaque roue admette, autour d'une position moyenne de la roue, un centre instantané de rotation (CIR r/s), ledit dispositif étant **caractérisé en ce qu'**il comporte des moyens de liaison en carrossage (10, 11, 12) permettant de lier les mouvements de carrossage d'une roue avec ceux de l'autre roue et qu'il est configuré en outre de manière à ce que, Y et Z étant respectivement les abscisse et ordonnée de la position instantanée dudit centre instantané de rotation dans le plan de carrossage, ladite position instantanée vérifie, pour un carrossage nul de la roue, la condition (B, D₀) suivante: *Z* ≤ 0.75 * *Y*-0.12158* *R*.

2. Dispositif selon la revendication 1 configuré de manière à ce que ladite condition (B, D₀) est en outre vérifiée au cours d'un débattement de carrossage de 0° à -1 °.

3. Dispositif selon la revendication 1 configuré de manière à ce que ladite condition (B, D₀) est en outre vérifiée au cours d'un débattement de carrossage de 0° à -2°.

4. Dispositif selon la revendication 1 configuré de manière à ce que ladite condition (B, D₀) est en outre vérifiée au cours d'un débattement de carrossage de 0° à -3°.

5. Dispositif selon la revendication 1 configuré de manière à ce que ladite condition (B, D₀) est en outre vérifiée au cours d'un débattement de carrossage de 0° à -4°.

6. Dispositif selon la revendication 1 configuré de manière à ce que ladite condition (B, D₀) est en outre vérifiée au cours d'un débattement de carrossage de 0° à -5°.

7. Dispositif selon l'une des revendications précédentes configuré de manière à ce que la position dudit centre instantané de rotation, pour un carrossage de -1°, vérifie en outre la condition (B, D₁) suivante: *Z* ≤ 0.75 * *Y*-0.156 2 * *R*.

8. Dispositif selon l'une des revendications précédentes configuré de manière à ce que la position dudit centre instantané de rotation, pour un carrossage de -2°, vérifie en outre la condition (B, D₂) suivante: *Z* ≤ 0.75 * *Y*-0.1908 * *R*.

9. Dispositif selon l'une des revendications précédentes configuré de manière à ce que la position dudit centre instantané de rotation, pour un carrossage de -3°, vérifie en outre la condition (B, D₃) suivante: *Z* ≤ 0.75**Y*-0.2255 * *R*.

10. Dispositif selon l'une des revendications précédentes configuré de manière à ce que la position dudit centre instantané de rotation, pour un carrossage de -4°, vérifie en outre la condition (B, D₄) suivante: *Z* ≤ 0.75**Y*-.2601 * *R*.

11. Dispositif selon l'une des revendications précédentes configuré de manière à ce que la position dudit centre instantané de rotation, pour un carrossage de -5°, vérifie en outre la condition (B, D₅) suivante: *Z* ≤ 0.75**Y-*0.2947 * *R.*

12. Dispositif selon l'une des revendications précédentes configuré en outre de manière à ce que, pour un carrossage nul de la roue, ledit centre instantané de rotation se situe sensiblement au niveau du sol et à une distance "d" du plan de roue (PR) vers l'intérieur du véhicule.

13. Dispositif selon l'une des revendications précédentes configuré en outre de manière à ce que, pour un carrossage nul de la roue, ladite position instantanée vérifie la condition (d) suivante:
• *Y* ≻ 0.125 * *R*

14. Dispositif selon l'une des revendications précédentes configuré en outre de manière à ce que, pour un carrossage nul de la roue, ladite position instantanée vérifie la condition (A) suivante:
• *Z*≥-0.75**Y*+0.12158**R*

15. Dispositif selon l'une des revendications précédentes dans lequel les moyens de carrossage comporte un porte-roue (3) et des biellettes (6, 7) articulées en leurs parties inférieures aux éléments de suspension (4) et en leurs parties supérieures audit porte-roue.

16. Dispositif selon l'une des revendications précédentes comprenant en outre des moyens de verrouillage afin de permettre le blocage du mouvement de carrossage en fonction, par exemple, de l'accélération transversale subie par le véhicule.

17. Véhicule comprenant le dispositif de suspension selon l'une des revendications précédentes.

## Claims

1. A vehicle suspension device comprising camber means (3, 6, 7) which impart to the wheels (2) of radius "R" a degree of freedom of the camber relative to the suspension elements (4, 8, 9), the wheels being linked to the suspension elements so that the camber movement of each wheel permits, around a mean position of the wheel, an instantaneous centre of rotation (CIR r/s), the said device being **characterised in that** it comprises camber connection means (10, 11, 12) which make it possible to link the camber movements of one wheel with those of the other wheel and also that it is configured so that, Y and Z being the abscissa and ordinate of the instantaneous position of the said instantaneous centre of rotation in the camber plane respectively, the said instantaneous position, for a zero camber of the wheel, satisfies the following condition (B, D₀): *Z* ≤ 0.75 * *Y* -0.12158 * *R*.

2. A device according to Claim 1, configured such that the said condition (B, D₀) is also satisfied during a camber deflection from 0° to -1°.

3. A device according to Claim 1, configured such that the said condition (B, D₀) is also satisfied during a camber deflection from 0° to -2°.

4. A device according to Claim 1, configured such that the said condition (B, D₀) is also satisfied during a camber deflection from 0° to -3°.

5. A device according to Claim 1, configured such that the said condition (B, D₀) is also satisfied during a camber deflection from 0° to -4°.

6. A device according to Claim 1, configured such that the said condition (B, D₀) is also satisfied during a camber deflection from 0° to -5°.

7. A device according to one of the preceding claims, configured such that the position of the said instantaneous centre of rotation, for a camber of -1°, also satisfies the following condition (B, D₁): *Z*≤0.75**Y*-0.1562**R*.

8. A device according to one of the preceding claims, configured such that the position of the said instantaneous centre of rotation, for a camber of -2°, also satisfies the following condition (B, D₂): *Z* ≤ 0.75 * *Y*-0.1908 * *R*.

9. A device according to one of the preceding claims, configured such that the position of the said instantaneous centre of rotation, for a camber of -3°, also satisfies the following condition (B, D₃): *Z* ≤ 0.75 * *Y*-0.2255 * *R*.

10. A device according to one of the preceding claims, configured such that the position of the said instantaneous centre of rotation, for a camber of -4°, also satisfies the following condition (B, D₄): *Z* ≤ 0.75 * *Y*-0.2601 * *R*.

11. A device according to one of the preceding claims, configured such that the position of the said instantaneous centre of rotation, for a camber of -5°, also satisfies the following condition (B, D₅): *Z* ≤ 0.75 * *Y*-0.2947 * *R*.

12. A device according to one of the preceding claims, also configured such that, for a zero camber of the wheel, the said instantaneous centre of rotation is located substantially at the level of the ground and at a distance "d" from the wheel plane (PR) towards the inside of the vehicle.

13. A device according to one of the preceding claims, also configured such that, for a zero camber of the wheel, the said instantaneous position satisfies the following condition (d):
• *Y* ≻ 0.125* *R*

14. A device according to one of the preceding claims, also configured such that, for a zero camber of the wheel, the said instantaneous position satisfies the following condition (A):
• *Z*≥-0.75**Y*+.012158**R*

15. A device according to one of the preceding claims, in which the camber means comprise a wheel carrier (3) and rods (6, 7) articulated in their lower parts to the suspension elements (4) and in their upper parts to the said wheel carrier.

16. A device according to one of the preceding claims, also comprising locking means to make it possible to block the camber movement as a function of, for example, the transverse acceleration to which the vehicle is subjected.

17. A vehicle comprising the suspension device according to one of the preceding claims.

## Patentansprüche

1. Aufhängungsvorrichtung für ein Fahrzeug, die Radsturz-Einrichtungen (3, 6, 7) enthält, welche den Rädern (2) mit einem Radius "R" einen Radsturz-Freiheitsgrad bezüglich der Aufhängungselemente (4, 8, 9) verleihen, wobei die Räder mit den Aufhängungselementen so verbunden sind, dass die Radsturz-Bewegung jedes Rads um eine mittlere Stellung des Rads herum einen Momentanpol (CIR r/s) zulässt, wobei die Vorrichtung **dadurch gekennzeichnet ist, dass** sie Radsturz-Verbindungseinrichtungen (10, 11, 12) aufweist, die es ermöglichen, die Radsturz-Bewegungen eines Rads mit denjenigen des anderen Rad zu verbinden, und dass sie außerdem so konfiguriert ist, dass, wenn Y und Z die Abszisse bzw. die Ordinate der Momentanstellung des Momentanpols in der Radsturzebene sind, die Momentanstellung für einen Radsturz Null des Rads die folgende Bedingung (B, D₀) erfüllt: Z ≤ 0,75 * Y-0,12158 * R.

2. Vorrichtung nach Anspruch 1, die so konfiguriert ist, dass die Bedingung (B, D₀) außerdem während einer Radsturz-Einfederung von 0° bis -1° erfüllt ist.

3. Vorrichtung nach Anspruch 1, die so konfiguriert ist, dass die Bedingung (B, D₀) außerdem während einer Radsturz-Einfederung von 0° bis -2° erfüllt ist.

4. Vorrichtung nach Anspruch 1, die so konfiguriert ist, dass die Bedingung (B, D₀) außerdem während einer Radsturz-Einfederung von 0° bis -3° erfüllt ist.

5. Vorrichtung nach Anspruch 1, die so konfiguriert ist, dass die Bedingung (B, D₀) außerdem während einer Radsturz-Einfederung von 0° bis -4° erfüllt ist.

6. Vorrichtung nach Anspruch 1, die so konfiguriert ist, dass die Bedingung (B, D₀) außerdem während einer Radsturz-Einfederung von 0° bis -5° erfüllt ist.

7. Vorrichtung nach einem der vorhergehenden Ansprüche, die so konfiguriert ist, dass die Stellung des Momentanpols für einen Radsturz von -1° außerdem die folgende Bedingung (B, D₁) erfüllt: Z ≤ 0,75 * Y - 0,1562 * R.

8. Vorrichtung nach einem der vorhergehenden Ansprüche, die so konfiguriert ist, dass die Stellung des Momentanpols für einen Radsturz von -2° außerdem die folgende Bedingung (B, D₂) erfüllt: Z ≤ 0,75 * Y - 0,1908 * R.

9. Vorrichtung nach einem der vorhergehenden Ansprüche, die so konfiguriert ist, dass die Stellung des Momentanpols für einen Radsturz von -3° außerdem die folgende Bedingung (B, D₃) erfüllt: Z ≤ 0,75 * Y-0,2255 * R.

10. Vorrichtung nach einem der vorhergehenden Ansprüche, die so konfiguriert ist, dass die Stellung des Momentanpols für einen Radsturz von -4° außerdem die folgende Bedingung (B, D₄) erfüllt: Z≤0,75*Y-0,2601*R.

11. Vorrichtung nach einem der vorhergehenden Ansprüche, die so konfiguriert ist, dass die Stellung des Momentanpols für einen Radsturz von -5° außerdem die folgende Bedingung (B, D₅) erfüllt: Z≤0,75*Y-0,2947*R.

12. Vorrichtung nach einem der vorhergehenden Ansprüche, die außerdem so konfiguriert ist, dass, für einen Radsturz Null des Rads, der Momentanpol sich im Wesentlichen im Bereich des Bodens und in einem Abstand "d" von der Radebene (PR) zur Innenseite des Fahrzeugs befindet.

13. Vorrichtung nach einem der vorhergehenden Ansprüche, die außerdem so konfiguriert ist, dass, für einen Radsturz Null des Rads, die Momentanstellung die folgende Bedingung (d) erfüllt:
• Y≻0,125*R.

14. Vorrichtung nach einem der vorhergehenden Ansprüche, die außerdem so konfiguriert ist, dass, für einen Radsturz Null des Rads, die Momentanstellung die folgende Bedingung (A) erfüllt:
• Z ≥ -0,75* Y+ 0,12158* R.

15. Vorrichtung nach einem der vorhergehenden Ansprüche, bei der die Radsturz-Einrichtungen einen Radhalter (3) und Verbindungsstangen (6, 7) enthalten, die in ihren unteren Bereichen an die Aufhängungselemente (4) und in ihren oberen Bereichen an den Radhalter angelenkt sind.

16. Vorrichtung nach einem der vorhergehenden Ansprüche, die außerdem Verriegelungseinrichtungen enthält, um die Blockierung der Radsturz-Bewegung abhängig zum Beispiel von der vom Fahrzeug erfahrenen Querbeschleunigung zu erlauben.

17. Fahrzeug, das die Aufhängungsvorrichtung nach einem der vorhergehenden Ansprüche enthält.
